# EUROPÄISCHE PATENTSCHRIFT

(11) **EP 3 247 604 B1**
(45) Veröffentlichungstag und Bekanntmachung des Hinweises auf die Patenterteilung: **07.11.2018**
(21) Anmeldenummer: 16701289.7
(22) Anmeldetag: 21.01.2016
(51) Int. Cl.: B60T 17/00, B01D 53/26

(54) **TROCKENMITTELPATRONE UND VERFAHREN ZUR HERSTELLUNG EINER TROCKENMITTELPATRONE**
DESICCANT CARTRIDGE AND METHOD FOR PRODUCING A DESICCANT CARTRIDGE
CARTOUCHE D'AGENT SICCATIF ET PROCÉDÉ DE FABRICATION D'UNE CARTOUCHE D'AGENT SICCATIF

(30) Priorität: 23.01.2015 DE 102015000892
(43) Veröffentlichungstag der Anmeldung: 29.11.2017
(73) Patentinhaber: KNORR-BREMSE Systeme für Nutzfahrzeuge GmbH, 80809 München (DE)
(72) Erfinder: SCHÄBEL, Stefan, 84036 Landshut (DE)
(86) Internationale Anmeldenummer: PCT/EP2016/051203
(87) Internationale Veröffentlichungsnummer: WO 2016/116547

(56) Entgegenhaltungen:
- EP-A1- 1 275 432
- WO-A2-2013/134274
- DE-A1-102005 059 952
- DE-A1-102008 035 965
- DE-A1-102008 063 084
- DE-A1-102009 005 158

## Beschreibung

Die vorliegende Erfindung bezieht sich auf eine Trockenmittelpatrone zum Trocknen von Luft und insbesondere auf eine Trockenmittelpatrone mit beigemengtem Koaleszenzmittel.

### Hintergrund

Trockenmittelpatronen kommen in Lufttrockner zum Einsatz und sind in vielen technischen Gebieten anzutreffen. So benötigen beispielsweise Druckluftsysteme trockene und saubere Luft. Auf der anderen Seite erzeugen diese Systeme Kondensationsfeuchtigkeit durch die im System vorhandenen plötzlichen Druckänderungen. Außerdem verursacht der vorhandene Kompressor in Druckluftsystemen häufig Ölrückstände oder andere Verschmutzungen. Trockenmittelpatronen werden genutzt, um die vorhanden Kondensationsfeuchtigkeit effizient und schnell der Druckluft zu entziehen, wobei die Trockenmittelpatronen in der Regel zusätzliche Filter oder Koaleszenzmittel aufweist, um die zu trocknende Luft gleichzeitig von Ölresten zu befreien.

Bei herkömmlichen Trockenmittelpatronen ist der Koaleszenzfilter als ein Wickel oder als gestapelte Scheiben in der Trockenmittelpatrone ausgeführt. Bei der wickelförmigen Ausgestaltung wird beispielsweise das Trockenmittel durch den Koaleszenzfilter eingewickelt, und zwar derart, dass die durchströmende Luft den Koaleszenzfilter passiert. Die gestapelten Scheiben werden beispielsweise am Anfang oder am Ende eines Luftweges angeordnet, sodass die Luft zunächst durch den scheibenförmigen Koaleszenzfilter durchströmt, um zu dem Trockenmittel zu gelangen, oder nach dem Passieren des Trockenmittels durch das Koaleszenzmittel strömt.

Eine herkömmliche Trockenmittelpatrone ist aus der DE 10 2008 035 965 A1 bekannt.

Ein Nachteil dieser konventionellen Lösungen besteht darin, dass sowohl die wickelförmige als auch die stapelförmige Ausgestaltung des Koaleszenzfilters häufig nicht verhindern können, dass Luft daran vorbeiströmt und so das Koaleszenzmittel umgeht. Dies kann beispielsweise über die Randbereiche der als Scheiben gebildeten oder der wickelförmigen Koaleszenzmittel geschehen.

Der vorliegenden Erfindung liegt die Aufgabe zugrunde, eine Trockenmittelpatrone zu schaffen, die eine alternative Anordnung für das Koaleszenzmittel bereitstellt.

### Zusammenfassung

Die oben genannte Aufgabe wird durch eine Trockenmittelpatrone nach Anspruch 1 und ein Verfahren zur Herstellung derselben nach Anspruch 8 gelöst.

Die vorliegende Erfindung bezieht sich auf eine Trockenmittelpatrone zum Trocknen von Luft entlang eines Strömungsweges. Die Trockenmittelpatrone umfasst die folgenden Merkmale: ein Gehäuse, ein Trockenmittel und ein Koaleszenzmittel. Das Gehäuse stellt eine Luftpassage für die zu trocknende Luft bereit und bietet einen Innenraum. Das Trockenmittel ist ausgebildet zum Trocknen der Luft entlang des Strömungsweges und das Koaleszenzmittel umfasst mehrere Teile, die mit dem Trockenmittel vermischt und in dem Innenraum verteilt sind.

Als Koaleszenzmittel im Sinne der vorliegenden Erfindung sollen alle Mittel umfasst sein, die geeignet sind, um Ölverschmutzungen oder andere Schmutzpartikel aus einer durchströmenden Luft zu entfernen. Daher kann bei weiteren Ausführungsbeispielen das Koaleszenzmittel ausgebildet sein, um die Luft entlang des Strömungsweges in Bezug auf Öl und/oder Schmutzteilchen zu filtern.

Als Innenraum soll jeder Freiraum im Gehäuse verstanden werden, der zur Aufbewahrung des Trockenmittels und des Koaleszenzmittels geeignet ist. Beispielsweise kann der Innenraum durch einen Teil des Gehäuses gebildet werden. Es ist ebenfalls möglich, dass der Innenraum durch einen separaten Behälter, der in das Gehäuse einsetzbar ist, definiert wird.

Durch die Mischung von Trockenmittel und Koaleszenzmittel im Innenraum wird erreicht, dass die durchströmende Luft auf ihren Weg mehr oder weniger zwangsläufig das Koaleszenzmittel passieren muss. Da die Luft unter Druck steht, wird der Strömungsweg der Luft in Abhängigkeit vom Druck möglichst gradlinig durch die Trockenmittel verlaufen, so dass eine bestimmte Mindestdichte an Koaleszenzmittel ausreicht, um die obige Bedingung zu erfüllen, sodass (nahezu) jeder Strömungsweg der Luft mit dem Koaleszenzmittel in Berührung gelangt.

Daher kann in weiteren Ausführungsbeispielen die Dichte oder Verteilung des Koaleszenzmittels in dem Trockenmittel derart gewählt sein, dass die durchströmende Luft die mehreren Teile des Koaleszenzmittels zumindest einmal passiert bzw. jene Luftmenge, die die Trockenmittelpatrone passiert, ohne mit dem Koaleszenzmittel in Kontakt zu gelangen, vernachlässigbar klein gewählt werden kann (durch eine geeignete Wahl der Dichte und/oder der Verteilung).

In weiteren Ausführungsbeispielen ist die Mischung von Trockenmittel und Koaleszenzmittel gleichförmig, sodass die Dichte des Koaleszenzmittels in dem Trockenmittel konstant ist.

Bei weiteren Ausführungsbeispielen kann die Mischung von Trockenmittel und Koaleszenzmittel aber auch ungleichförmig sein, sodass die Dichte des Koaleszenzmittels in dem Trockenmittel variabel ist. Beispielsweise kann das Koaleszenzmittel in dem Trockenmittel derart verteilt sein, dass die Dichte des Koaleszenzmittels in dem Trockenmittel von einer Lufteinströmöffnung (Einlass) in den Innenraum hin zu einer Luftausströmöffnung (Auslass) aus dem Innenraum zunimmt oder abnimmt.

Durch eine ungleichförmige Verteilung des Koaleszenzmittel in dem Trockenmittel kann erreicht werden, dass das Koaleszenzmittel im Wesentlichen am Einlass oder am Auslass der Luft angeordnet ist, sodass beim Einströmen zunächst die Luft von Verschmutzungen oder von Feuchtigkeit befreit wird. Ein weiterer Vorteil der ungleichförmigen Verteilung liegt darin, dass das Trockenmittel weniger Verschmutzungen ausgesetzt wird (das Koaleszenzmittel ist stromaufwärts in dem Luftstrom angeordnet), oder dass das Koaleszenzmittel vor Feuchtigkeit geschützt wird (das Koaleszenzmittel ist stromabwärts in dem Luftstrom angeordnet). Über eine geeignete Wahl der Dichteverteilung des Koaleszenzmittels können beide Effekte, in Abhängigkeit der konkreten Gegebenheiten, vorteilhaft genutzt werden.

Die vorliegende Erfindung bezieht sich auch auf ein Verfahren zum Herstellen einer zuvor beschriebenen Trockenmittelpatrone zum Trocknen von Luft. Das Verfahren umfasst die folgenden Schritten: Bereitstellen eines Gehäuses mit einem Innenraum, welches eine Luftpassage für die zu trocknende Luft bereitstellt; Einbringen eines Trockenmittels zum Trocknen der Luft in den Innenraum; und Einbringen eines Koaleszenzmittels mit mehreren Teile derart in den Innenraum, dass das Trockenmittel und das Koaleszenzmittel vermischt in dem Innenraum vorliegen.

Bei weiteren Ausführungsbeispielen kann der Innenraum zumindest eine Lufteinströmöffnung und zumindest eine Luftausströmöffnung aufweisen, und der Schritt des Einbringens des Trockenmittels und/oder des Koaleszenzmittels kann derart ausgeführt werden, dass die Dichte des Koaleszenzmittels in dem Trockenmittel von einer Lufteinströmöffnung zu einer Luftausströmöffnung zunimmt oder abnimmt.

Gemäß der vorliegenden Erfindung ist die Form oder Gestalt des Koaleszenzmittels nicht weiter eingeschränkt, solange die Strömungswege der Luft nicht durch das Koaleszenzmittel vollständig blockiert werden. Beispielsweise kann das Koaleszenzmittel als Pulver und/oder durch eine Vielzahl Kugeln und/oder durch eine Vielzahl von Stäben gebildet sein, wobei die Stäbe gerade oder krummlinienförmig ausgebildet sein können. Außerdem können die Stäbe senkrecht zur Durchströmungsrichtung der Luft angeordnet sein, um so der Luft eine möglichst große Angriffsfläche zu bieten und ein effektives Reinigen der Luft zu ermöglichen. Sie können aber auch schräg zur Durchströmungsrichtung angeordnet sein, um einen möglichst langen Kontakt mit den zu filternden Verschmutzungen zu erreichen. Daher werden gemäß weiterer Ausführungsbeispiele nicht nur die Dichte und Verteilung des Koaleszenzmittel gezielt gewählt, sondern auch die Form und die Ausrichtung des Koaleszenzmittel derart gewählt, dass ein optimale Reinigung erzielt wird.

### Kurzbeschreibung der Figuren

Die Ausführungsbeispiele der vorliegenden Erfindung werden besser verstanden von der folgenden detaillierten Beschreibung und den beiliegenden Zeichnungen der unterschiedlichen Ausführungsbeispielen, die jedoch nicht so verstanden werden sollten, dass sie die Offenbarung auf die spezifischen Ausführungsformen einschränkt, sondern lediglich der Erklärung und dem Verständnis dienen.
- Fig. 1: zeigt eine Trockenmittelpatrone zum Trocknen von Luft gemäß einem Ausführungsbeispiel.
- Fig. 2A, B: zeigen weitere Ausführungsbeispiele der Trockenmittelpatrone mit weiteren optionalen Komponenten.
- Fig. 3A, B: zeigen weitere Ausführungsbeispiele für kugelförmiges Koaleszenzmittel.
- Fig. 4A, B: zeigen weitere Ausführungsbeispiele für stabförmiges Koaleszenzmittel.

### Detaillierte Beschreibung

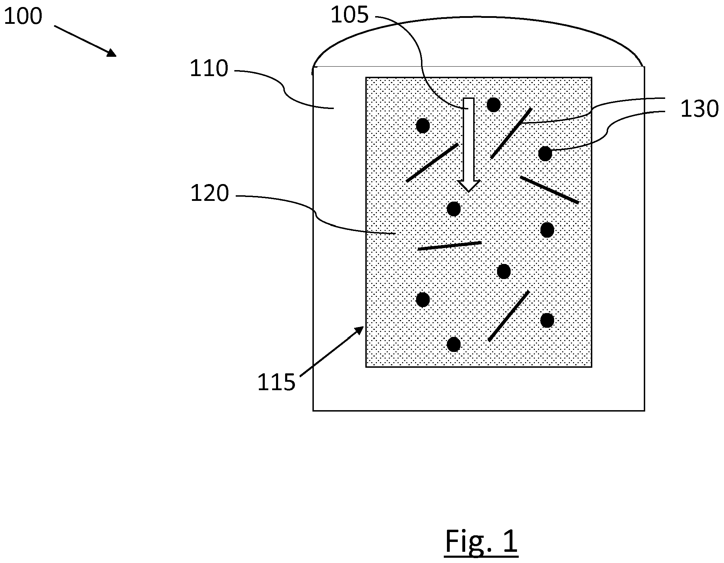

Fig. 1 zeigt eine Trockenmittelpatrone 100 zum Trocknen von Luft, die entlang eines Strömungsweges 105 durch die Trockenmittelpatrone 100 strömt. Die Trockenmittelpatrone 100 umfasst ein Gehäuse 110, welches eine Luftpassage (nicht gezeigt) für die zu trocknende Luft bereitstellt und einen Innenraum 115 bietet. Die Trockenmittelpatrone 100 umfasst ferner ein Trockenmittel 120, welches zum Trocknen der durchströmenden Luft geeignet ist, und ein Koaleszenzmittel 130, das in Form von mehreren Teilen ausgebildet ist, wobei das Trockenmittel 120 und das Koaleszenzmittel 130 vermischt im Innenraum 115 angeordnet sind.

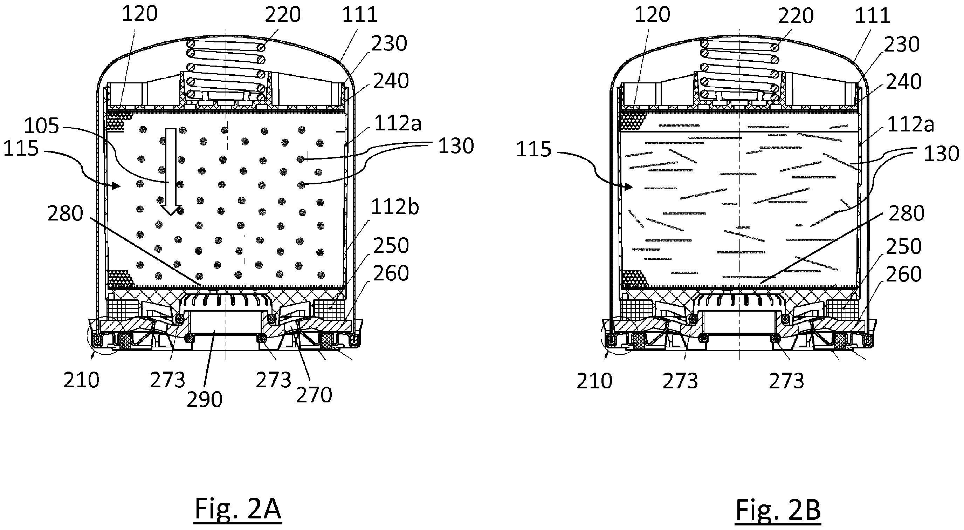

Fig. 2A und Fig. 2B zeigen weitere Ausführungsbeispiele der Trockenmittelpatrone mit weiteren optionalen Komponenten. Beispielsweise ist in der Fig. 2A das Koaleszenzmittel 130 durch eine Vielzahl von kugelförmiger Teilchen gebildet, während in der Fig. 2B das Koaleszenzmittel 130 durch eine Vielzahl von stabförmigen Teilchen gebildet ist.

Die Trockenmittelpatronen 100, wie sie in den Fig. 2A und 2B zu sehen sind, weisen ferner ein Gehäuse auf, welches ein Außengehäuse 111 und ein Innengehäuse 112 umfasst. Das Innengehäuse 112 umfasst einen oberen Teil 112a und einen unteren Teil 112b, wobei der obere Teil 112a sich beispielsweise an Lufteinlassöffnungen 240 anschließt und der untere Teil 112b sich beispielsweise an Luftausströmöffnungen 280 anschließt. Das Außengehäuse 111 ist an einem Unterbau 260 durch Befestigungsmittel 210 fixiert, wobei der Unterbau 260 einen peripheren Lufteinlass 270 und einen zentral angeordneten Luftauslass 290 aufweist. In dem Unterbau 260 oder dem Innengehäuse 112 kann optional eine Vor- oder Nachfiltereinheit 250 ausgebildet sein, die eine optionale weitere Filterung vornimmt. Die Luft strömt durch den Lufteinlass 270 von unten in die Trockenmittelpatrone 100 ein und wird anschließend entlang einer Seitenpassage an dem Innengehäuse 112 vorbei geleitet, um anschließend an einer der Einlassöffnung 270 gegenüberliegenden Seite über die Einströmöffnungen 240 in den Innenraum 115 zu gelangen.

Um die einströmende Luft effizient von der ausströmenden Luft zu trennen sind Abdichtungen 273 vorgesehen. Ferner umfasst die Trockenmittelpatrone 100 eine Abdeckplatte 230 mit den Einströmöffnungen 240, die eine obere Begrenzung des Innenraumes 115 darstellt. Die Abdeckplatte 230 wird durch eine Feder 220 relativ zu dem Außengehäuse 111 vorgespannt (d.h. es wird ein Druck ausgeübt), sodass das Trockenmittel 120 unter einer Vorspannung in dem Innenraum 115 steht.

Bei dem in der Fig. 2A gezeigten Ausführungsbeispiel ist das Koaleszenzmittel 130 gleichförmig in Form von Kugeln in dem Trockenmittel 120 verteilt. Der besseren Übersicht wegen ist das Trockenmittel 120 nur ansatzweise gezeigt (siehe linke obere Ecke und linke untere Ecke), wobei das Trockenmittel 120 den gesamten Innenbereich 115 des Gehäuses ausfüllt, ohne dass es in der Fig. 2A zu sehen ist. Die gezeigte Dichte ist ebenfalls nur exemplarisch zu verstehen. In weiteren Ausführungsbeispielen ist die Dichte entsprechend den Gegebenheiten angepasst (z.B. zu erwartenden Verschmutzungen).

In der Fig. 2B ist ein Ausführungsbeispiel gezeigt, welches sich von dem Ausführungsbeispiel der Fig. 2A lediglich dadurch unterscheidet, dass das Koaleszenzmittel 130 stabförmig ausgebildet ist. Beispielsweise kann das stabförmig ausgebildete Koaleszenzmittel 130 überwiegend senkrecht zu einer Luftströmungsrichtung 105 (beispielweise von oben nach unten) angeordnet sein, um dem Luftstrom eine möglichst große Angriffsfläche zu bieten und so eine effiziente Reinigung der Luft zu ermöglichen. Bei weiteren Ausführungsbeispielen kann das Koaleszenzmittel 130 auch schräg angeordnet sein.

Alle weiteren Komponenten aus der Fig. 2B unterscheiden sich nicht von dem Ausführungsbeispiel, wie es in der Fig. 2A zu sehen ist, sodass eine wiederholte Beschreibung nicht erforderlich ist.

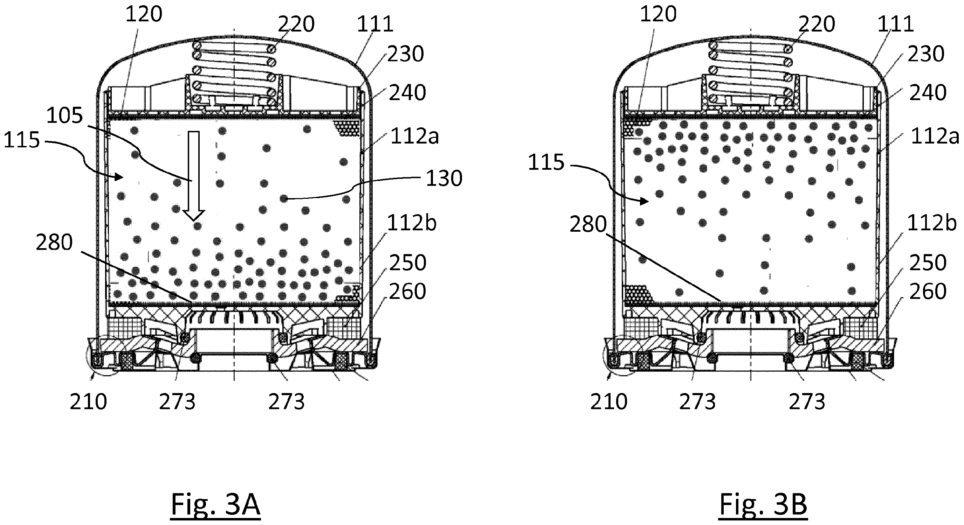

Die Fig. 3A und 3B zeigen weitere Ausführungsbeispiele für kugelförmig angeordnetes Koaleszenzmittel, wie es in der Fig. 2A zu sehen ist. Das Ausführungsbeispiel der Fig. 3A zeigt eine mögliche inhomogene Verteilung des Koaleszenzmittels. Als Beispiel ist eine inhomogene Verteilung derart gewählt, dass die Dichte des Koaleszenzmittel innerhalb des Trockenmittels 120 von einer vertikal höheren Position nach unten zunimmt (beispielsweise entlang der Stromrichtung der durchströmenden Luft). Die Fig. 3B zeigt ein Ausführungsbeispiel, wo die Dichte des Koaleszenzmittels sich genau entgegengesetzt zu der Fig. 3A ändert. Somit ist in der Fig. 3B die Dichte des Koaleszenzmittels 130 in der Nähe der Abdeckplatte 230 (vertikal oben) höher als in der Nähe des Unterbaus 260.

Bei weiteren Ausführungsbeispielen ändert sich die Dichte des Koaleszenzmittel 130 nicht kontinuierlich. Stattdessen kann im oberen Teil 112a des Gehäuses die Dichte anders sein als im unteren Teil 112b, wobei die jeweilige Dichte im oberen Teil 112a und unteren Teil 112b konstant sein kann (bis auf Fluktuationen in einem vorbestimmten Fehlerbereich).

Wenn die Luft von oben in die Trockenmittelpatrone 100 gelangt (von der Position, wo die Feder 220 angeordnet ist) wird in der Fig. 3A zunächst vorwiegend das Trockenmittel passiert und anschließend das Koaleszenzmittel 130, währenddessen in dem Ausführungsbeispiel der Fig. 3B die durchströmende Luft zunächst ein Gebiet mit erhöhter Dichte des Koaleszenzmittels 130 passiert, um anschließend in einer Region zu gelangen, in welchem die Dichte des Koaleszenzmittels 130 niedriger ist.

Alle weiteren Komponenten aus der Fig. 3A und Fig. 3B unterscheiden sich nicht von dem Ausführungsbeispiel, wie es in der Fig. 2A zu sehen ist, sodass eine wiederholte Beschreibung nicht erforderlich ist.

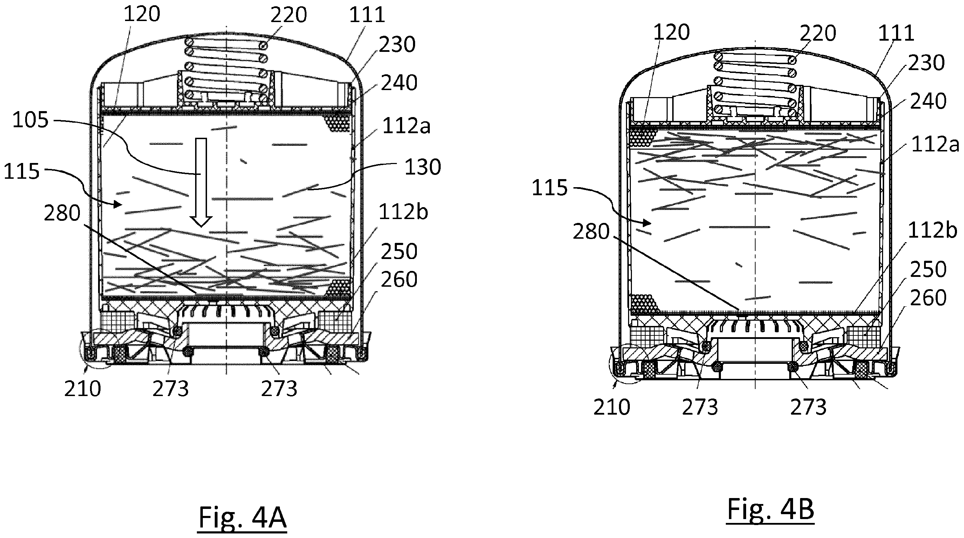

Die Fig. 4A und 4B zeigen Ausführungsbeispiele, die ähnlich sind zu den Ausführungsbeispielen der Fig. 3A und 3B, wobei lediglich das kugelförmig ausgebildete Koaleszenzmittel 130 der Fig. 3A und 3B durch stabförmiges Koaleszenzmittel 130 ersetzt wurde.

Die Fig. 4A zeigt wiederum ein Ausführungsbeispiel, in welchem die Dichte des stabförmig ausgebildeten Koaleszenzmittels 130 entlang einer Luftströmungsrichtung 105 ansteigt, während in der Fig. 4B ein Ausführungsbeispiel zu sehen ist, in welchem die Dichte des Koaleszenzmittels 130 in dem Trockenmittel 120 kontinuierlich abnimmt.

Bei weiteren Ausführungsbeispielen ändert sich die Dichte des Koaleszenzmittel 130 nicht kontinuierlich. Stattdessen kann im oberen Teil 112a des Gehäuses die Dichte anders sein als im unteren Teil 112b, wobei die jeweilige Dichte im oberen Teil 112a und unteren Teil 112b konstant sein kann (bis auf Fluktuationen in einem vorbestimmten Fehlerbereich).

Alle weiteren Komponenten aus der Fig. 4A und der Fig. 4B unterscheiden sich nicht von dem Ausführungsbeispiel, wie es in der Fig. 2A zu sehen ist, sodass eine wiederholte Beschreibung nicht erforderlich ist.

Die weiteren Ausführungsformen, wie sie in den Fig. 3 und 4 gezeigt sind, weisen eine ungleichmäßige Verteilung bzw. eine einseitige Verdichtung des Koaleszenzmittels 130 innerhalb des Innenraums 115 auf. Damit wird es möglich, eine flexible Gewichtung der Eigenschaften zu ermöglichen.

Einerseits kann damit auf eine Ölfilterung nach dem Trockenmittel 120 Wert gelegt werden, was zu einem Schutz des Koaleszenzmittels 130 (was als Koaleszenzfilter wirkt) führt. Diese Gewichtung ist insbesondere in den Ausführungsbeispielen der Fig. 3A und 4A gegeben.

Andererseits, wenn der Fokus auf einer Ölfilterung vor dem Trockenmittel 120 liegt und somit ein Schutz des Trockenmittels 120 im Mittelpunkt steht (beispielsweise vor Ölverschmutzung), kann dies mit den Ausführungsformen, wie sie beispielsweise in den Fig. 3B und 4B zu sehen sind, erreicht werden. Zwischenformen der gezeigten Ausführungsformen sind durch eine flexible Änderung der Dichteverteilung des Koaleszenzmittels 130 in dem Trockenmittel 120 möglich.

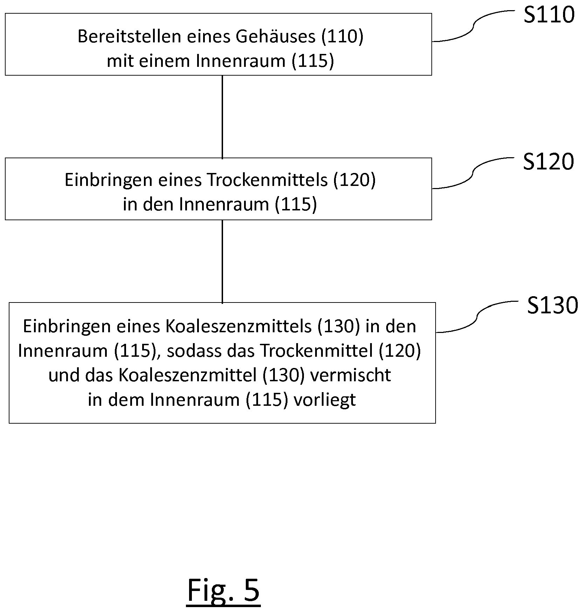

Fig. 5 zeigt ein Flussdiagram für ein Verfahren zum Herstellen einer Trockenmittelpatrone 100 zum Trocknen von Luft entlang eines Strömungsweges 105. Das Verfahren umfasst die folgenden Schritte: Bereitstellen S110 eines Gehäuses 110 mit einem Innenraum 115, welches eine Luftpassage für die zu trocknende Luft bereitstellt; Einbringen S120 eines Trockenmittels 120 zum Trocknen der Luft in den Innenraum 115; und Einbringen S130 eines Koaleszenzmittels 130 mit mehreren Teile derart in den Innenraum 115, dass das Trockenmittel 120 und das Koaleszenzmittel 130 vermischt in dem Innenraum 115 vorliegt.

Die genannte Reihenfolge der Schritte impliziert keine zeitliche Abfolge oder nur insoweit, wie es zwingend erforderlich ist. Beispielweise kann das Trockenmittel 120 vor oder nach oder gleichzeitig mit dem Koaleszenzmittel 130 eingefüllt werden. Es kann auch eine Mischung von Trockenmittel 120 und Koaleszenzmittel 130 gleichzeitig eingefüllt werden, ohne dass es zwei separate Schritte umfasst.

Vorteile der Ausführungsbeispiele der vorliegenden Erfindung liegen darin, dass in der vorliegenden Erfindung beide Prinzipien (d.h. der Koaleszenzfilter ist vor oder nach dem Trockenmittel 120 angeordnet) vereint werden können. Damit wird es möglich, dass das Trockenmittel 120 von Ölverschmutzungen sicher geschützt wird oder im umgekehrten Fall, dass der Koaleszenzfilter (Koaleszenzmittel 130) vor einem Zusetzen mit Feuchtigkeit sicher geschützt wird.

Außerdem bieten Ausführungsbeispiele der vorliegenden Erfindung den Vorteil, dass ein Bypass (ein Umgehungspfad) sich nicht bzw. weniger häufig oder schwieriger herausbilden kann, als dies bei konventionellen Trockenmittelpatronen der Fall ist. Wie eingangs dargelegt, ist es bei konventionellen Trockenmittelpatronen wichtig, den Wickel oder die gestapelten Scheiben von Koaleszenzmittel sehr zuverlässig anzuordnen, um Umgehungspfade auszuschließen, da ansonsten das komplette Paket seine Wirkung verlieren würde. Diese Gefahr besteht bei dem als Schüttgut ausgestalteten Koaleszenzmittel 130 nicht, da über eine einfache Dichteverteilung des Schüttgutes innerhalb des Trockenmittels 120 sichergestellt werden kann, dass sich keine Umgehungspfade ausbilden können und die durchströmende Luft dazu zwangsläufig an das Koaleszenzmittel vorbeigeführt werden muss.

Im Rahmen der vorliegenden Erfindung sind Definitionen für Verteilungen oder Anordnungen von dem Koaleszenzmittel 130 in einem statistischen Sinn auszulegen und nicht derart, dass jedes einzelne Teil des Koaleszenzmittels 130 genau diese Eigenschaft aufweist. Beispielsweise ist unter einer bestimmten Verteilung (z.B. gleichförmigen/ungleichförmigen) oder Anordnung (z.B. senkrecht/schräg zur Luftstromrichtung) zu verstehen, dass zumindest ein bestimmter Prozentualer Anteil (z.B. 60% oder 80%) der Teile des Koaleszenzmittel diese Eigenschaft mit einer bestimmter Fehlerbreite (z.B. +/- 10% oder +/- 30%) besitzen.

Ein weiterer Vorteil von Ausführungsbeispielen der vorliegenden Erfindung besteht in der einfachen und robusteren Bauweise, da lediglich das Trockenmittel 120 vor dem Einsetzen entsprechend vermischt werden muss, ohne dass ein genau justierter Wickel oder Stapel innerhalb des Innenraums 115 der Trockenmittelpatrone anzuordnen wäre.

Von Vorteil ist ebenso, dass Ausführungsbeispiele der vorliegenden Erfindung eine effizientere Durchströmung des Koaleszenzfilters 130 ermöglichen, da ungünstige Strömungsverläufe im Trockenmittelbereich 120 nicht so stark ins Gewicht fallen, wie beispielsweise bei den konventionellen Filterscheibenpaketen, die oben oder unten angeordnet sein können, wo eine effiziente Nutzung des Filters nur im Bereich der Einströmöffnungen oder der Ausströmöffnungen des Trockenmitteldeckels oder des Trockenmittelbehälters gegeben ist.

Zusammenfassend basieren Ausführungsbeispiele der vorliegenden Erfindung darauf, dass das Koaleszenzmittel 130 als Schüttgut zum Einsatz kommt, welches dem Trockenmittel 120 beigemengt wird (und nicht wickel- oder stapelförmig ausgebildet ist, wie es bei konventionellen Trockenmittelpatronen der Fall ist). Mögliche Formen des Koaleszenzmittels 120 umfassen dabei: kugelförmig ausgebildetes Koaleszenzmittel 120 oder flockenförmig ausgebildetes Koaleszenzmittel 120. Es können aber auch Filterscheibenfragmente zum Einsatz kommen, wie es beispielsweise in den Ausführungsbeispielen der Fig. 4A und 4B zu sehen sind. Außerdem ist es möglich, dass das Koaleszenzmittel 130 pulverförmig dem Trockenmittel 120 beigemengt wird.

Bei weitere Ausführungsbeispielen können auch andere Formen des Koaleszenzmittels zum Einsatz kommen.

### Liste von Bezugszeichen

- 100: Trockenmittelpatrone
- 105: Luftströmungsweg
- 111: Außengehäuse
- 112a,b: Innengehäuse
- 115: Innenraum
- 120: Trockenmittel
- 130: Koaleszenzmittel
- 210: Befestigungsmittel
- 230: Abdeckelement
- 240: Einströmöffnungen
- 250: Filtereinheit
- 260: Unterbau
- 270: Einlass
- 273: Abdichtungen
- 280: Ausströmöffnungen
- 290: Auslass

## Patentansprüche

1. Trockenmittelpatrone (100) zum Trocknen von Luft entlang eines Strömungsweges (105), mit folgenden Merkmalen:
ein Gehäuse (110), welches eine Luftpassage für die zu trocknende Luft bereitstellt und einen Innenraum (115) bietet;
ein Trockenmittel (120) zum Trocknen der Luft entlang des Strömungsweges (105); **dadurch gekennzeichnet dass**
ein Koaleszenzmittel (130), das mehrere Teile umfasst und mit dem Trockenmittel (120) vermischt ist, in dem Innenraum (115) verteilt ist.

2. Trockenmittelpatrone (100) nach Anspruch 1, wobei die Mischung von Trockenmittel (120) und Koaleszenzmittel (130) gleichförmig ist, sodass die Dichte des Koaleszenzmittels (130) in dem Trockenmittel (120) konstant ist.

3. Trockenmittelpatrone nach Anspruch 1, wobei die Mischung von Trockenmittel (120) und Koaleszenzmittel (130) ungleichförmig ist, sodass die Dichte des Koaleszenzmittels (130) in dem Trockenmittel (120) variabel ist.

4. Trockenmittelpatrone (100) nach Anspruch 3, wobei der Innenraum (115) zumindest eine Lufteinströmöffnung (240) und zumindest eine Luftausströmöffnung (280) aufweist und das Koaleszenzmittel (130) in dem Trockenmittel (120) derart verteilt ist, dass eine Dichte des Koaleszenzmittels (130) in dem Trockenmittel (120) von der Lufteinströmöffnung (240) zu der Luftausströmöffnung (280) zunimmt oder abnimmt.

5. Trockenmittelpatrone (100) nach einem der vorhergehenden Ansprüche, wobei das Koaleszenzmittel (130) ausgebildet ist, um die Luft entlang des Strömungsweges (105) in Bezug auf Öl und/oder Schmutzteilchen zu filtern.

6. Trockenmittelpatrone (100) nach einem der vorhergehenden Ansprüche, wobei die mehreren Teile des Koaleszenzmittels (130) durch eine Vielzahl von Kugeln und/oder eine Vielzahl von Stäben und/oder Pulver gebildet sind.

7. Trockenmittelpatrone (100) nach einem der vorhergehenden Ansprüche, wobei eine Dichte oder Verteilung des Koaleszenzmittels (130) in dem Trockenmittel (120) derart gewählt ist, dass die durchströmende Luft die mehreren Teile des Koaleszenzmittels (130) zumindest einmal passiert.

8. Verfahren zum Herstellen einer Trockenmittelpatrone (100) zum Trocknen von Luft entlang eines Strömungsweges (105), mit folgenden Schritten:
Bereitstellen (S110) eines Gehäuses (110) mit einem Innenraum (115), welches eine Luftpassage für die zu trocknende Luft bereitstellt;
Einbringen (S120) eines Trockenmittels (120) zum Trocknen der Luft in den Innenraum (115); und
Einbringen (S130) eines Koaleszenzmittels (130) mit mehreren Teile derart in den Innenraum (115), dass das Trockenmittel (120) und das Koaleszenzmittel (130) vermischt in dem Innenraum (115) vorliegt.

9. Verfahren nach Anspruch 8, wobei der Innenraum (115) zumindest eine Lufteinströmöffnung (240) und zumindest eine Luftausströmöffnung (280) aufweist und der Schritt des Einbringens des Trockenmittels (120) und des Koaleszenzmittels (130) derart ausgeführt werden, dass die Dichte des Koaleszenzmittels (130) in dem Trockenmittel (120) von einer Lufteinströmöffnung (240) zu einer Luftausströmöffnung (280) zunimmt oder abnimmt.

## Claims

1. Desiccant cartridge (100) for drying air along a flow path (105), the said cartridge having the following characteristics:
a housing (110), which provides an air passage for the air to be dried and has an inside space (115);
a desiccant (120) for drying the air along the flow path (105);
**characterised in that**
a coalescence means (130) which comprises a plurality of pieces and is mixed with the desiccant (120), is distributed within the said inside space (115).

2. Desiccant cartridge (100) according to Claim 1, wherein the desiccant (120) and the coalescence means (130) are mixed uniformly, so that the concentration of the coalescence means (130) in the desiccant (120) is constant.

3. Desiccant cartridge according to Claim 1, wherein the desiccant (120) and the coalescence means (130) are mixed non-uniformly, so that the concentration of the coalescence means (130) in the desiccant (120) is variable.

4. Desiccant cartridge (100) according to Claim 3, wherein the inside space (115) has at least one air inlet opening (240) and at least one air outlet opening (280), and the coalescence means (130) is distributed in the desiccant (120) in such manner that that a concentration of the coalescence means (130) in the desiccant (120) increases or decreases from the air inlet opening (240) toward the air outlet opening (280).

5. Desiccant cartridge (100) according to any of the preceding claims, wherein the coalescence means (130) is designed to filter oil and/or dirt particles out of the air along the flow path (105).

6. Desiccant cartridge (100)) in according to any of the preceding claims, wherein the plurality of pieces of the coalescence means (130) are formed by a plurality of balls and/or a plurality of rods and/or a powder.

7. Desiccant cartridge (100) according to any of the preceding claims, wherein a concentration or distribution of the coalescence means (130) in the desiccant (120) is chosen such that the air flowing through flows past the plurality of pieces of the coalescence means (130) at least once.

8. Method for producing a desiccant cartridge (100) for drying air along a flow path (105), which method comprises the following steps:
provision (S110) of a housing (110) with an inside space (115), which forms an air passage for the air to be dried;
introduction (SI20) of a desiccant (120) for drying the air in the inside space (115); and
introduction of a coalescence means (130) having a plurality of pieces into the said inside space (15), in such manner that the desiccant (120) and the coalescence means (130) are mixed together in the inside space (115).

9. Method according to Claim 8, wherein the inside space (115) has at least one air inlet opening (240) and at least one air outlet opening (280), and the steps of introducing the desiccant (120) and the coalescence means (130) are carried out in such manner that the concentration of the coalescence means (130) in the desiccant (120) increases or decreases from an air inlet opening (240) toward an air outlet opening (280).

## Revendications

1. Cartouche (100) d'agent déshydratant pour sécher de l'air le long d'un trajet (105) d'écoulement, ayant les caractéristiques suivantes :
un boîtier (110), qui met à disposition un passage pour de l'air à sécher et qui offre un espace (115) intérieur;
un agent (120) déshydratant pour sécher l'air le long du trajet (105) d'écoulement, **caractérisée en ce que** un agent (130) de coalescence, qui comprend plusieurs parties et qui est mélangé à l'agent (120) déshydratant, est réparti dans l'espace (115) intérieur.

2. Cartouche (100) d'agent déshydratant suivant la revendication 1, dans laquelle le mélange d'agent (120) déshydratant et d'agent (130) de coalescence est uniforme, de sorte que la masse volumique de l'agent (130) de coalescence dans l'agent (120) déshydratant est constante.

3. Cartouche d'agent déshydratant suivant la revendication 1, dans laquelle le mélange de l'agent (120) déshydratant et de l'agent (130) de coalescence n'est pas uniforme, de sorte que la masse volumique de l'agent (130) de coalescence dans l'agent (120) déshydratant est variable.

4. Cartouche (100) d'agent déshydratant suivant la revendication 3, dans laquelle l'espace (115) intérieur a au moins une ouverture (240) d'entrée d'air et au moins une ouverture (280) de sortie d'air et l'agent (130) de coalescence est réparti dans l'agent (120) déshydratant, de manière à ce qu'une masse volumique de l'agent (130) de coalescence dans l'agent (120) déshydratant augmente ou diminue de l'ouverture (240) d'entrée de l'air à l'ouverture (280) de sortie de l'air.

5. Cartouche (100) d'agent déshydratant suivant l'une des revendications précédentes, dans laquelle l'agent (130) de coalescence est constitué pour filtrer l'air le long du trajet (105) d'écoulement en ce qui concerne de l'huile et/ou des particules de saleté.

6. Cartouche (100) d'agent déshydratant suivant l'une des revendications précédentes, dans laquelle les plusieurs parties de l'agent (130) de coalescence sont formées d'une pluralité de billes et/ou d'une pluralité de bâtonnets et/ou de poudre.

7. Cartouche (100) d'agent déshydratant suivant l'une des revendications précédentes, dans laquelle une masse volumique ou une répartition de l'agent (130) de coalescence dans l'agent (120) déshydratant est choisie de manière à ce que l'air, qui passe dans les plusieurs parties de l'agent (130) de coalescence, y passe au moins une fois.

8. Procédé de production d'une cartouche (100) d'agent déshydratant pour sécher de l'air le long d'un trajet (105) d'écoulement, comprenant les stades suivants :
on se procure (S110) un boîtier (110) ayant un espace (115) intérieur, qui met à disposition un passage pour de l'air à sécher;
on introduit (S120) un agent (120) déshydratant pour sécher l'air dans l'espace (115) intérieur et
on introduit (S130) un agent (130) de coalescence ayant plusieurs parties dans l'espace (115) intérieur, de manière à ce que l'agent (120) déshydratant et l'agent (130) de coalescence soient présents de manière mélangée dans l'espace (115) intérieur.

9. Procédé suivant la revendication 8, dans lequel l'espace (115) intérieur a au moins une ouverture (40) d'entrée d'air et au moins une ouverture (280) de sortie d'air et le stade d'introduction de l'agent (120) déshydratant et de l'agent (130) de coalescence est réalisé de manière à ce que la masse volumique de l'agent (130) de coalescence dans l'agent (120) déshydratant augmente ou diminue de l'ouverture (240) d'entrée d'air à l'ouverture (280) de sortie d'air.
